# EUROPEAN PATENT SPECIFICATION

(11) **EP 2 402 630 B1**
(45) Date of publication and mention of the grant of the patent: **17.07.2013**
(21) Application number: 09840813.1
(22) Date of filing: 11.03.2009
(51) Int. Cl.: F16H 15/38

(54) **WORKING VEHICLE**
ARBEITSFAHRZEUG
VÉHICULE DE TRAVAIL

(30) Priority: 27.02.2009 JP 2009046966
(43) Date of publication of application: 04.01.2012
(73) Proprietor: ISEKI & CO., LTD., Matsuyama-shi Ehime-ken 799-2692 (JP)
(72) Inventor: MURAKAMI, Takahisa c/o Technical Division of ISEKI & CO., LTD., Iyo-gun Ehime 791-2111 (JP); WATANABE, Tomoaki c/o Technical Division of ISEKI & CO., LTD., Iyo-gun Ehime 791-2111 (JP); OOSHITA, Junichi c/o Technical Division of ISEKI & CO., LTD., Iyo-gun Ehime 791-2111 (JP); SUIZU, Kiyoaki c/o Technical Division of ISEKI & CO., LTD., Iyo-gun Ehime 791-2111 (JP)
(74) Representative: Emerson, Peter James
(86) International application number: PCT/JP2009/054630
(87) International publication number: WO 2010/097966

(56) References cited:
- WO-A1-2004/090382
- JP-A- 10 132 044
- JP-A- 10 132 046
- JP-A- 2005 273 734
- JP-A- 2006 138 338
- JP-T- 2006 522 906

## Description

### TECHNICAL FIELD

The present invention relates to a work vehicle that carries out work with a working implement mounted on a rear portion of a vehicle body. In particular, it relates to a power transmission section from an engine to wheels.

### BACKGROUND ART

In order to carry out work in a low-speed driving, a transmission incorporating a toroidal continuously variable speed change device is utilized as a continuously variable transmission mechanism which is effective in power transmission during low-speed driving.
For example, work vehicles according to the preamble of claim 1 with a transmission incorporating a toroidal continuously variable speed change device are described in JP2005-273734A.

### SUMMARY OF THE INVENTION

### PROBLEM TO BE SOLVED BY THE INVENTION

In a toroidal continuously variable speed change device, opposing faces of an input disk and an output disk are made in an annularly recessed face shapes to form full toroidal cavities, and the power is transmitted by frication rollers interposed between the opposing faces, for example, at equal intervals of 120°, and rotation of the input disk continuously changed its speed and transmitted to the output disk while inclination angles of the friction rollers are changed by hydraulic control. In this case, since inclination angle change of three friction rollers is performed to one full toroidal cavity by hydraulic pressure, a supporting configuration and a hydraulic pressure control configuration of the friction rollers tend to be complex.
A working cylinder, a hydraulic apparatus, and the like, which operate these friction rollers, are required to be disposed effectively within a limited space.
A problem to be solved is to configure a mechanism and hydraulic control of the toroidal speed change device simply, thereby reducing manufacturing cost.

### MEANS FOR SOLVING THE PROBLEMS

The above problem to be solved of the present invention is achieved by the following configurations.
That is, the invention described in claim 1 is a work vehicle where friction rollers 5 are provided between an input disk 4b and an output disk 4a mounted to a variator shaft 10, a toroidal transmission mechanism 4 which changes inclination angles of the friction rollers 5 to change rotation on the side of the input disk 4b and transmit the same to the side of the output disk 4a is housed in a transmission case 1, and a speed change device which changes the inclination angles of the friction rollers 5 of the toroidal transmission mechanism 4 is provided, wherein the speed change device comprises friction roller support arms 69 swingably pivoting the friction rollers 5; a fulcrum plate 68 having pistons 96 that swing the friction roller support arms 69 about pivot shafts 72; a spacer plate 70 that closes cylinder holes 55 of working cylinders 6 reciprocating the pistons 96; and a hydraulic block 71 constituting a control hydraulic device that supplies or discharges oil into or from the working cylinders 6, and the fulcrum plate 68, the spacer plate 70, and the hydraulic block 71 in the speed change device are assembled in a pile to a side wall of the transmission case 1 whereby said side wall is a left or a right side wall as seen in a driving direction of the vehicle.
Further, in the invention described in claim 2, there is provided the work vehicle according to claim 1, wherein a configuration that the friction rollers 5 are pivotally supported by a plurality of roller support members 51 is adopted, a configuration that the roller support members 51 and the friction roller support arms 69 are coupled to each other via spherical bearings B to be supported is adopted, and a configuration that oil is supplied from a plurality of oil passages 78, 78a, 78b disposed on an inner face of the fulcrum plate 68 to the plurality of roller support members 51 is adopted.
In the invention described in claim 3, there is provided the work vehicle according to claim 1, wherein a configuration that partition walls 2, 3 that isolate the toroidal transmission mechanism 4 and the other sections from each other are disposed within the transmission case 1 and oil is stored in a bottom portion isolated from the other portions is adopted, and the oil circulates to lubricate the toroidal transmission mechanism 4.
In the invention described in claim 4, there is provided the work vehicle according to claim 1, wherein, in a hydraulic supply passage for reciprocating piston rods 7 coupled to the pistons 96, hydraulic supply chambers 55a which advance the piston rods 7 are configured on either front or back side of the fulcrum plate 68, and hydraulic supply chambers 55b which retreat the piston rods 7 are configured on the other side thereof.

### EFFECTS OF THE INVENTION

An effect of claim 1 lies in that, since the fulcrum plate 68, the spacer plate 70, and the hydraulic block 71 which constitute the speed change device that performs speed change of the toroidal transmission mechanism 4 are assembled in a pile to a side wall of the transmission case 1 housing the toroidal transmission mechanism 4, as compared with a case where they are mounted on a lower portion of the transmission case 1, a distance from a farm field increases, and therefore influence of splashing mud, stones, or the like decreases.
Furthermore, by adopting a configuration that the pistons 96 that act so as to incline a plurality of friction rollers 5 are provided in the fulcrum plate 68, and the cylinder holes 55 of the working cylinders 6 in which the piston 96 reciprocates are closed by the spacer plate 70, a configuration and machining of the working cylinders 6 can be simplified, which results in reducing in manufacturing cost.
An effect of claim 2 lies in that, in addition to the effect of claim 1, pipes for oil supplied to the friction rollers 5 are centralized so that a configuration can be simplified.
An effect of claim 3 lies in that, in addition to the effect of claim 1, oil used in the toroidal transmission mechanism 4 can be stored separately from commonly-used oil stored in the transmission case 1, and the toroidal transmission mechanism 4 can be effectively cooled by oil circulation.
An effect of claim 4 lies in that, in addition to the effect of claim 1, because the plurality of friction rollers 5 of the toroidal transmission mechanism 4 perform speed change operations of inclining simultaneously to the same direction, by configuring the hydraulic supply chamber 55a which advances the piston rod 7 on either front or back side of the fulcrum plate 68 and configuring a hydraulic supply chamber 55b which retreats the piston rod 7 on the other side thereof, the configuration of an oil supply circuit can be simplified.

### BRIEF DESCRIPTIONS OF THE DRAWINGS

FIG. 1 is a sectional side view of a transmission case in which the present invention is implemented;
FIG. 2 is a system diagram of power transmission within a transmission case;
FIG. 3 is a hydraulic drive system diagram of a main section of the present invention;
FIG. 4 is a partially enlarged side view of a transmission case;
FIG. 5 is a sectional front view of the transmission case;
FIG. 6 is a partially enlarged side view of a toroidal transmission section;

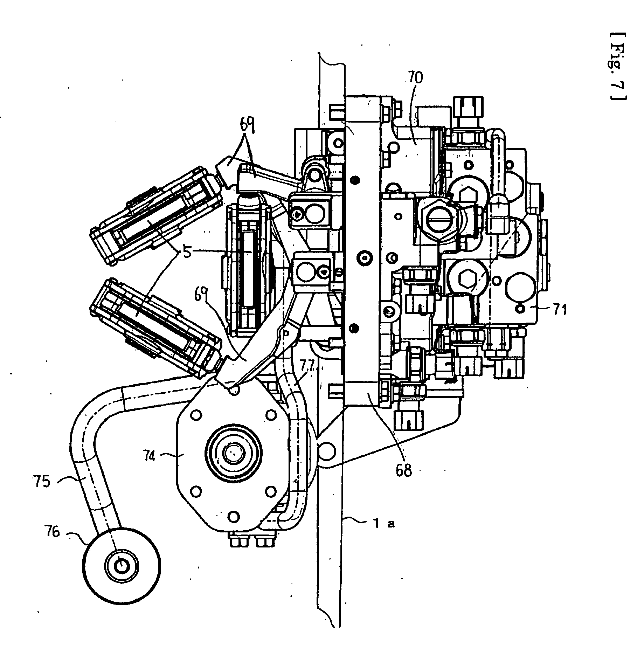

FIG. 7 is a partially enlarged back view of the toroidal transmission section;
FIG. 8 is a partially enlarged sectional view of the toroidal transmission section;
FIG. 9 is a partially enlarged side view of the toroidal transmission section;
FIG. 10 is a partially enlarged sectional side view of the toroidal transmission section;
FIG. 11 is a partially enlarged side view of a toroidal transmission section;
FIG. 12 is a partially enlarged perspective view of the toroidal transmission section;
FIG. 13 is a partially enlarged sectional view of the toroidal transmission section;

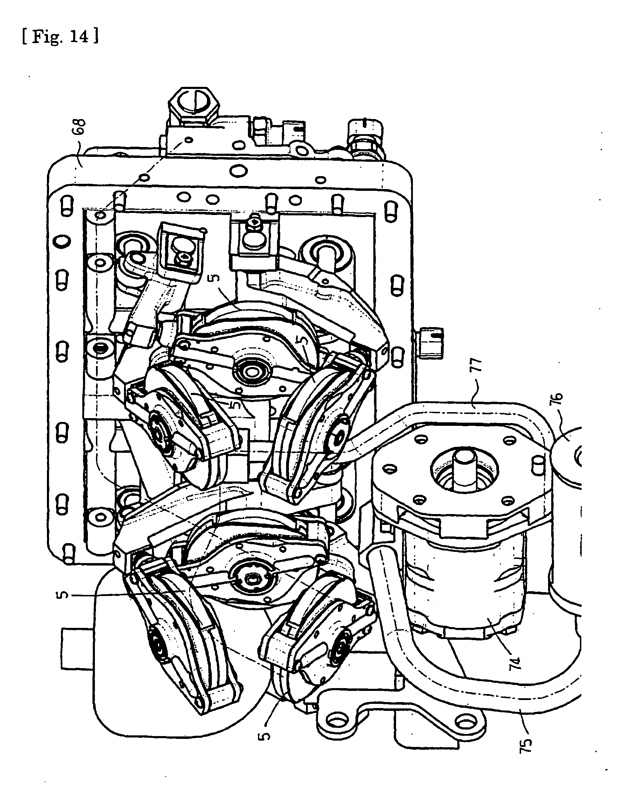

FIG. 14 is a perspective view of the toroidal transmission section;

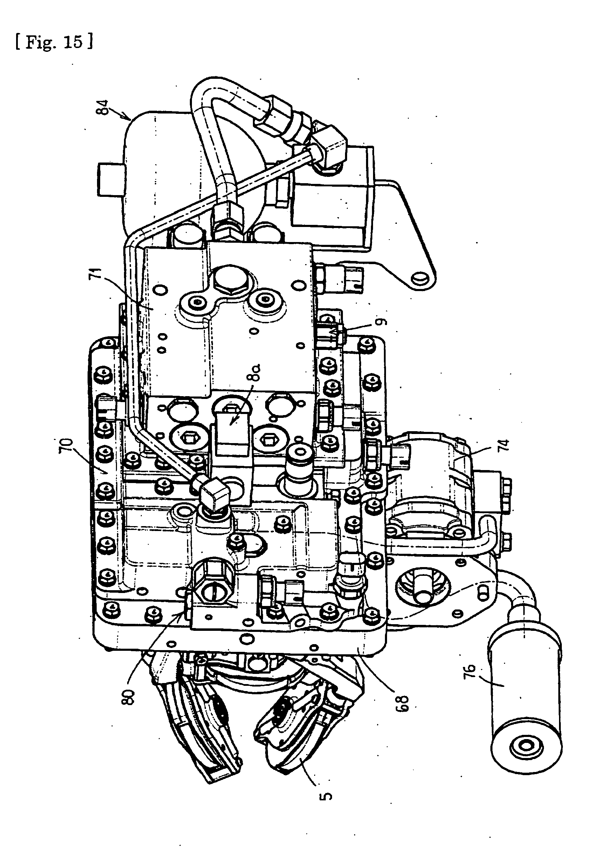

FIG. 15 is a perspective view of the toroidal transmission section;

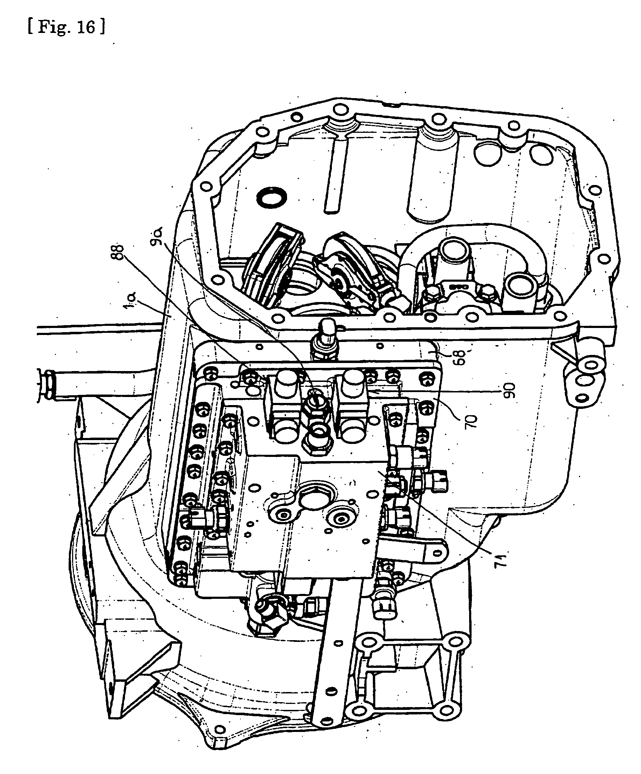

FIG. 16 is an enlarged perspective view of the transmission case;

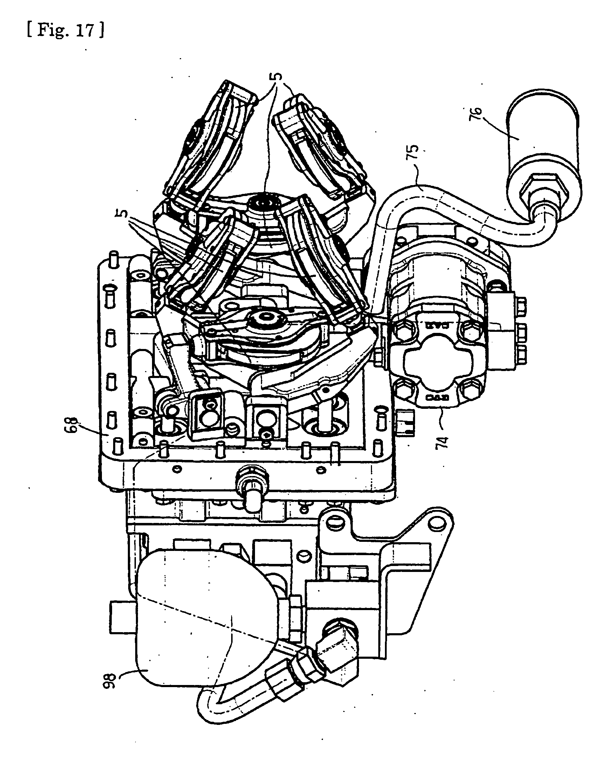

FIG. 17 is a perspective view of the toroidal transmission section;
FIG. 18 is a plan view of the transmission case; and
FIG. 19 is a graph showing a relationship between a vehicle speed and a variator ratio.

### BEST MODES FOR CARRYING OUT THE INVENTION

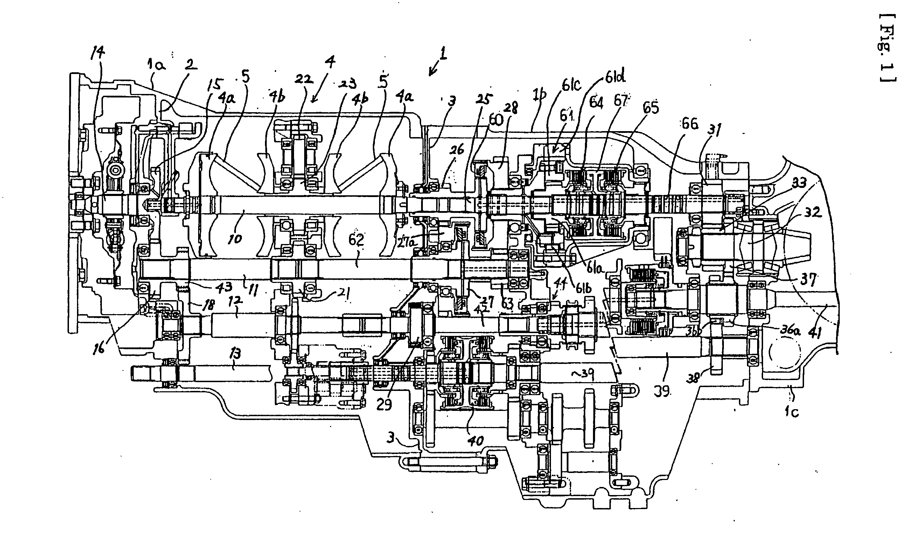

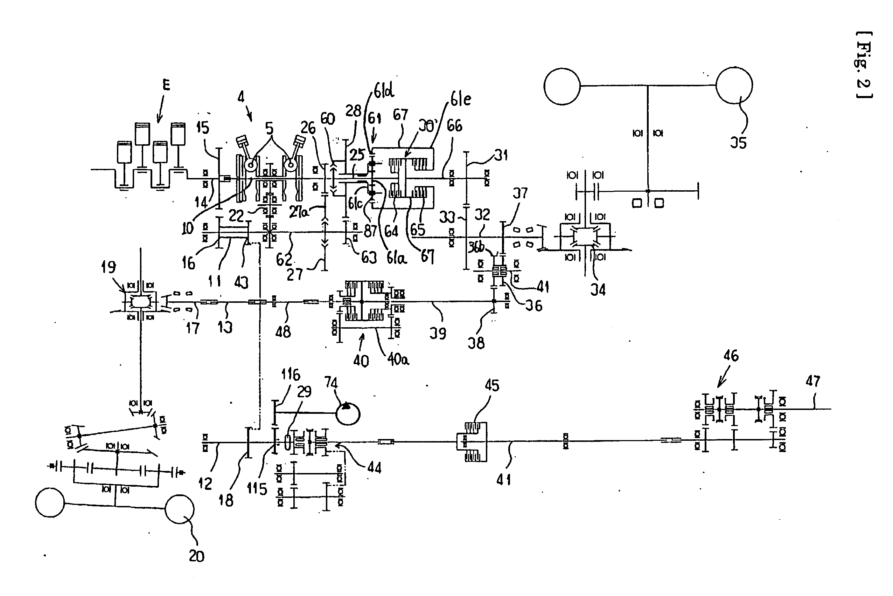

With reference to the drawings, embodiments of the present invention implemented in a transmission case for a farm tractor will be described below.
As shown in FIG. 1, a transmission case 1 is composed of three hollow cases, from front, a front case 1a, a middle case 1b, and a rear case 1c, which are integrally joined.
The front case 1a has a front partition wall 2 and a rear partition wall 3, and oil stored in the front case 1a is exclusive oil to a toroidal transmission mechanism, and different from oil stored in the middle case 1b and the rear case 1c. In this front case 1a, from top, a variator shaft 10, a driving input shaft 11, a PTO input shaft 12, and a front-wheel drive shaft 13 are pivotally supported. A main input shaft 14 engaged directly with an output shaft of an engine E is pivotally installed in front of the variator shaft 10 on a shaft center line thereof. In this way, storing the oil used in a toroidal transmission mechanism 4 separately from oil commonly used and stored in the transmission case 1 makes it possible to perform oil circulation to cool the toroidal transmission mechanism 4 effectively.
A gear 15 fixed to the main input shaft 14 inside the front partition wall 2 meshes with a large diameter gear 16 of large and small diameter gears 16, 43 fixed to the driving input shaft 11 positioned below to transmit acceleration, and the small diameter gear 43 of the large and small diameter gears 16, 43 rotates simultaneously. This small diameter gear 43 meshes with a gear 18 fixed to the PTO input shaft 12 positioned further below to transmit deceleration. The PTO input shaft 12 is engaged with a PTO shaft transmission mechanism 44 provided on a relay shaft 42 within the middle case 1b, and a one-way clutch 29 is provided within the middle case 1b before transmission to the PTO shaft transmission mechanism 44 in order to prevent reverse rotation due to swing-over at the time of stoppage of the engine. The variator shaft 10 is rotatably supported to the gear 15 fixed to the main input shaft 14.
The lowermost front-wheel drive shaft 13 transmits power to a front differential shaft 17 by transmission from the middle case 1b described later. The front differential shaft 17 drives right and left front wheels 20 via a front differential gear apparatus 19. (See FIG. 2)

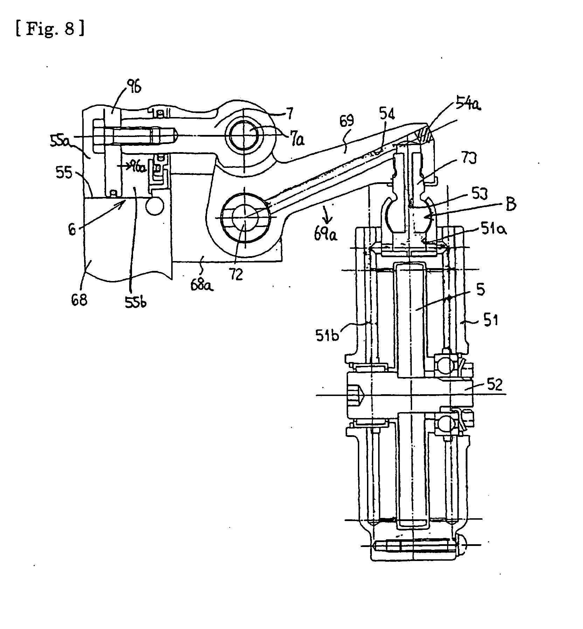

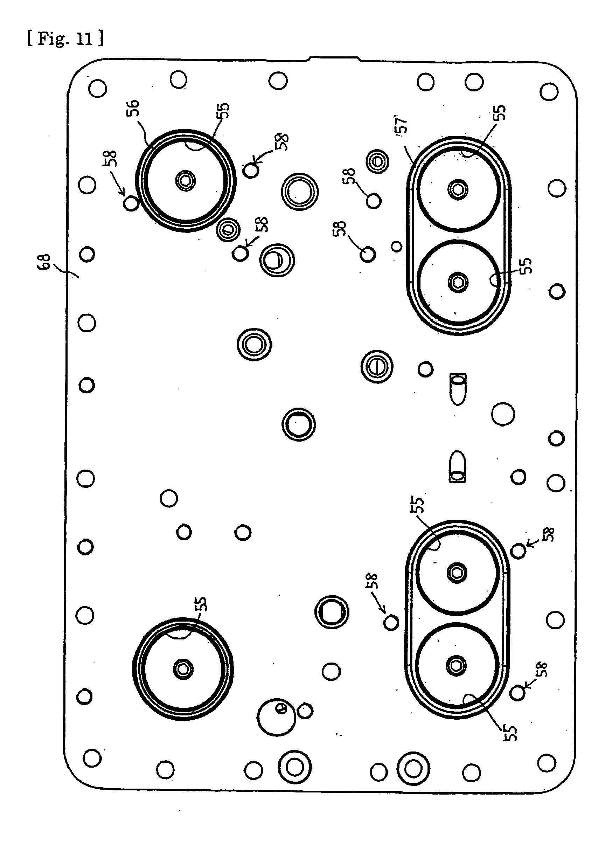

The toroidal transmission mechanism 4 mounted to the variator shaft 10 will be described. Two output disks 4a, 4a that rotate integrally with the variator shaft 10, and input disks 4b, 4b that are positioned centrally between both the output disks 4a, 4a and that rotate with a gear 23 meshing with a gear 21 fixed to the driving input shaft 11 positioned below via a relay gear 22 are provided. A configuration (variator mechanism) that friction rollers 5 pivotally supported on distal ends of friction roller support arms 69 are supported in a group of three for each between the output disks 4a, 4a and the input disks 4b, 4b is adopted. The friction roller support arm 69 is coupled to a piston rod 7 of a piston 96 that reciprocates within a working cylinder 6 constructed in a fulcrum plate 68. The friction roller 5 is supported by a roller support member 51, and the space between the roller support member 51 and the friction roller support arm 69 are supported each other via a spherical bearing B. (See FIG. 8)
An arrangement of cylinder holes 55 of the working cylinders 6 in the fulcrum plate 68 is shown in FIG. 11.
A configuration is adopted that, by changing positions of the three friction rollers 5 grouped on one side according to hydraulic pressure operation, inclination angles of the friction rollers 5 are changed and a power transmission ratio transmitted from the input disks 4b, 4b to the output disks 4a, 4a is altered to change the speed of rotation of the variator shaft 10. The speed change efficiency is excellent such as about 80 to 90% and especially, such a feature that the transmission efficiency is high at a low speed is obtained.
Note that a specific structure of the toroidal transmission mechanism 4 will be described later.

The rotation of the variator shaft 10 drives a gear 26 spline-fitted on an input clutch shaft 25 coupled to the variator shaft 10, and a one-way clutch 60 on the side of the middle case 1b of the rear partition wall 3, and drives a sun gear 61a of a planetary gear mechanism 61. On the other hand, the driving input shaft 11 drives a carrier 61c supporting a planetary gear 61b of the planetary gear mechanism 61, via a subsequent extension shaft 62, a gear 63 on this extension shaft 62, and a gear 28 meshing with the gear 63 and loosely fit on the input clutch shaft 25, to revolve around the sun gear 61a.
On a terminatory side of the input clutch shaft 25, a high-speed side clutch 64 in the form of a hydraulic clutch is provided, and a low-speed side clutch 65 in the form of a hydraulic clutch is disposed adjacent to the high-speed side clutch 64. Note that the high-speed side clutch 64 engages the input clutch shaft 25 and an output clutch shaft 66 with each other in response to clutch operation for engagement thereof. The low-speed side clutch 65 is configured to engage a ring gear 61d of the planetary gear mechanism 61 and the output clutch shaft 66 with each other. These high-speed side clutch 64 and low-speed side clutch 65 constitute a high-low clutch denoted by the reference numeral 30.
With the high-speed side clutch 64 of the high-low clutch 30 put in an engagement state and the low-speed side clutch 65 put in a disengagement state, rotation of the variator shaft 10, that is, rotation of the input clutch shaft 25, which has been changed in speed, is transmitted to the output clutch shaft 66 via the high-speed side clutch 64 and a power transmission drum 67, and rotation of the output clutch shaft 66 performs speed-change rotation (referred to as "high regime") from low-speed forward rotation to high-speed forward rotation of the variator shaft 10.
With the low-speed side clutch 65 of the high-low clutch 30 put in an engagement state and the high-speed side clutch 64 put in a disengagement state, rotation of the variator shaft 10 which has been changed in speed is transmitted to the sun gear 61a, while rotation of the extension shaft 62 drives the carrier 61c of the planetary gear mechanism 61 via the gear 63, the gear 28, and the planetary gear 61b, and thus synthetic rotation of rotations of the sun gear 61a and the carrier 61c drives the ring gear 61d rotationally, and rotation of a casing 61e that rotates integrally with the ring gear 61d is transmitted to the output clutch shaft 66 via the low-speed side clutch 65 and the power transmission drum 67. Rotation of the output clutch shaft 66 in this case performs speed-change rotation (referred to as "low regime") from low-speed reverse rotation to low-speed forward rotation through zero rotation.
The extension shaft 62 of the driving input shaft 11 is provided with an external gear 27a of a one-way clutch 27 meshing with the gear 26 spline-fitted on the input clutch shaft 25.
The gear 63 meshing with the external gear 28 of the one-way clutch 60 of the input clutch shaft 25 is spline-fitted on the extension shaft 62 to transmit power. Such a drive configuration of the planetary gear 61d and the sun gear 61a of the planetary gear mechanism 61 drives the ring gear 61d in a speed change manner.
Note that, since a power transmission configuration is simplified by forming the external gear 28 on the one-way clutch 60 to transmit power directly, speed change power transmission from the low regime to the high regime can be performed continuously and smoothly.

With the above configuration, when engagement of the low-speed side clutch 65 is performed, the output clutch shaft 66 is changed in speed from low-speed reverse rotation to low-speed forward rotation through zero rotation, and in order to achieve further accelerate in forward rotation, engagement of the high-speed side clutch 64 is performed to change the inclinations of the friction rollers 5. Engaging or disengaging timing of the low-speed side clutch 65 and the high-speed side clutch 64, so-called transfer from the low regime to the high regime is controlled by engagement or disengagement of the high-low clutch 30 composed of the low-speed side clutch 65 and the high-speed side clutch 64, so that speed change is performed smoothly from the low-speed reverse rotation to the high-speed forward rotation through the zero rotation.
A gear 31 spline-fitted on a rear end of the output clutch shaft 66 of the high-low clutch 30 meshes with a gear 33 spline-fitted on a differential shaft 32 of a rear differential gear apparatus 34, so that rotation of the output clutch shaft 66 drives the differential shaft 32. Rotation of the differential shaft 32 is transmitted to right and left rear wheels 35 via the rear differential gear apparatus 34.
The rotation of the differential shaft 32 is transmitted from a gear 37 to a gear 38 spline-fitted on a front-wheel drive extension shaft 39 via double gears 36a, 36b loosely fitted on a PTO output shaft 41, and the gear 38 rotates to drive the front-wheel drive extension shaft 39.
The front-wheel drive extension shaft 39 is mounted with a front-wheel acceleration clutch 40 that drives the front wheels to rotate at the same speed or rotate at an accelerated speed when a tractor turns. Further, the front-wheel drive extension shaft 39 is coupled to the front-wheel drive shaft 13 via a relay shaft 48 to transmit power thereto. Regarding the front-wheel acceleration clutch 40, acceleration is performed when a hydraulic clutch is switched to drive the relay shaft 48 via a shaft 40a.

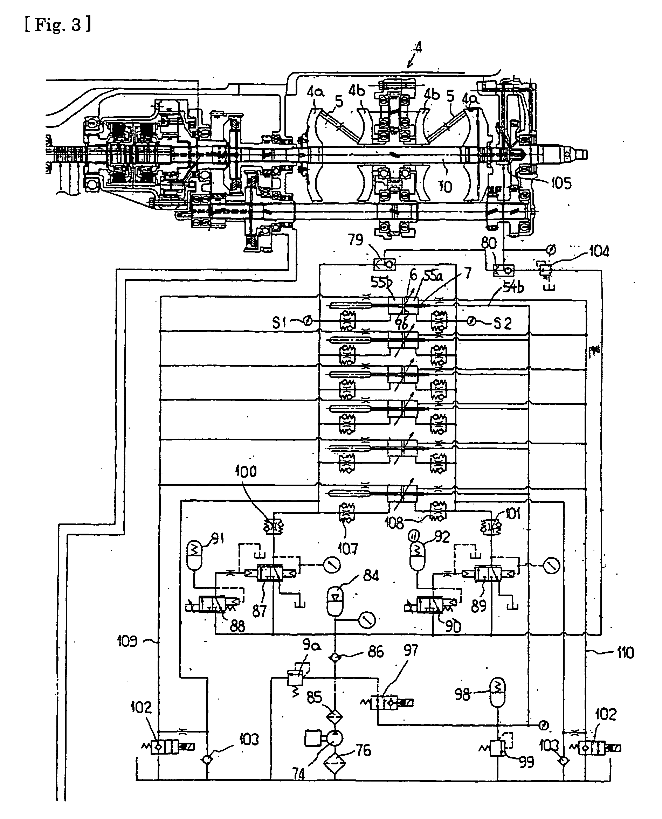

Next, detailed description of the toroidal transmission mechanism 4 will be provided with reference to FIG. 3 and subsequent figures.
As described above, an outline of the toroidal transmission mechanism 4 has such a configuration that the friction rollers 5 are provided between the input disks 4b, 4b and the output disks 4a, 4a mounted on the variator shaft 10, and rotation of the input disk 4b is accelerated or decelerated by changing the inclination angles of the friction rollers 5 to be transmitted to the output disk 4a.

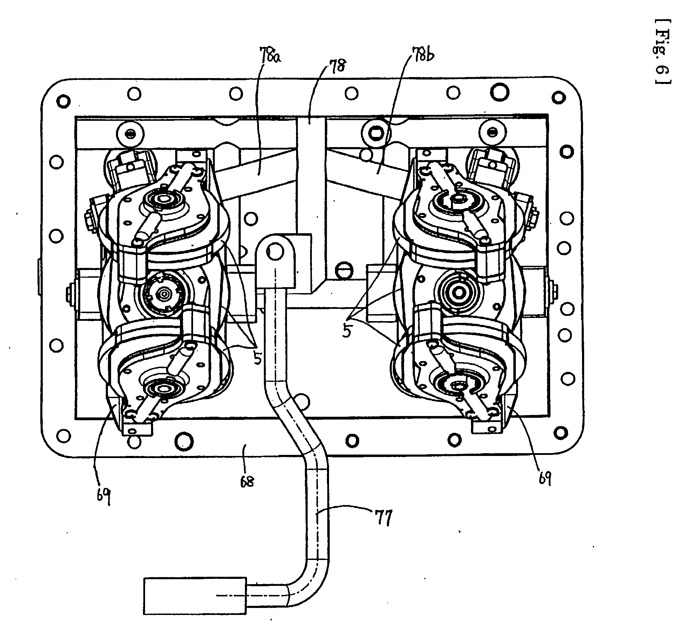

As shown in FIG. 6, the friction rollers 5 are pivotally supported to distal ends of the friction roller support arms 69 provided on the fulcrum plate 68 mounted on a right face of the front case 1a constituting a part of the transmission case 1. The friction rollers 5 are provided in a group of three for each between the front input and output disks 4a, 4b and the rear output and input disks 4a, 4b so as to be distributed circumferentially equally.

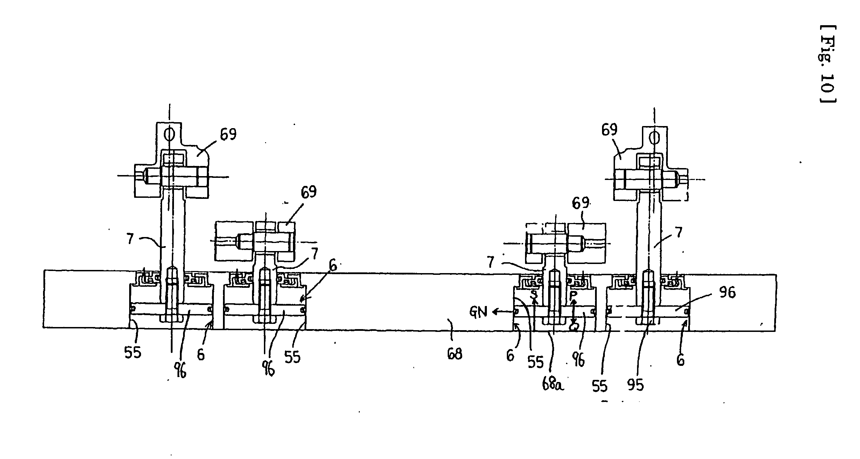

As shown in FIG. 8, such a configuration is adopted that the roller support member 51 is supported on one end of the friction roller support arm 69 via the spherical bearing B, and the friction roller 5 is rotatably supported to a supporting shaft 52 by the roller support member 51. The piston rod 7 is coupled to the other end of the friction roller support arm 69. The piston rod 7 reciprocates together with the piston 96 within the fulcrum plate 68.
The fulcrum plate 68 is provided with a boss portion 68a pivoting the friction roller support arm 69 and projecting towards the front case 1a, the working cylinder 6 that swings the friction roller support arm 69 is provided within the fulcrum plate 68, and the piston rod 7 coupled to the piston 96 of the working cylinder 6 is pivoted to the friction roller support arm 69. (See FIGS. 8 and 10.) The reference numeral 7a denotes a pivot shaft of the piston rod 7 and the friction roller support arm 69.
When oil is fed into a chamber 55a (see FIGS. 3 and 8) of the cylinder hole 55, the piston 96 and the piston rod 7 move in a direction of arrow 96a. Then, the friction roller 5 rotates together with the friction roller support arm 69 in a direction of arrow 69a about the pivot shaft 72 serving as a fulcrum. A reverse action is performed when oil is fed into a chamber 55b (see FIGS. 3 and 8) of the cylinder hole 55.

The position of the piston 96 with respect to the cylinder hole 55 in FIG. 10 shows a geared neutral (GN). That is, this is a position in which the toroidal transmission mechanism 4 does not transmit rotation, and shows a boundary position between a forward movement side and a backward movement side. When the piston 96 moves in a direction of arrow P, the vehicle body moves backward. When the piston 96 moves in a direction of arrow Q, the vehicle body moves forward at a low speed. At this time, the low-speed side clutch 65 is in the low regime of an engagement state thereof.
Since the state of the piston 96 that has reached an end portion 68a of the fulcrum plate 68 shows a maximum number of rotations in the low regime, when the vehicle body should be further shifted into a high-speed state, the high-speed side clutch 64 is shifted to an engagement state to reach the high regime. A configuration is adopted that acceleration is performed in high-speed forward rotation state according to movement of the piston 96 in a direction of arrow S.
Since the plurality of friction rollers 5 of the toroidal transmission mechanism 4 perform a speed change operation of inclining in the same direction simultaneously, a configuration of an oil supply circuit can be simplified by configuring the hydraulic supply chamber 55a which advances the piston rod 7 on either front or back side of the fulcrum plate 68 and configuring the hydraulic supply chamber 55b which retreats the piston rod 7 on the other side.
A spacer plate 70 that closes the cylinder hole 55 of the working cylinder 6 is mounted on an external side of the fulcrum plate 68, and a hydraulic block 71 is further mounted on the spacer plate 70. By stacking these members on a side wall of the transmission case 1, as compared with a case where they are mounted on a lower portion of the transmission case 1, arrangement to a PTO shaft driving a working implement that is mounted on a rear portion of the vehicle body, a shaft for front-wheel drive, or the like can be prevented from being influenced. Further, a distance from a farm field increases, and therefore influence of splashing mud, stones, or the like decreases.

FIG. 11 shows a joint surface of the fulcrum plate 68 with the spacer plate 70, where grooves in which oil seal rings 56, 57 are fitted are formed around the cylinder holes 55 machined from this joint surface. As illustrated, a groove surrounding two adjacent cylinder holes 55 has an oval shape so that the holes are sealed with the single oil seal ring 57. Threaded holes 58 into which a bolt used for fastening with the spacer plate 70 is screwed around the cylinder hole 55 so that a sealing property is improved by fastening near the oil seal rings 56, 57.

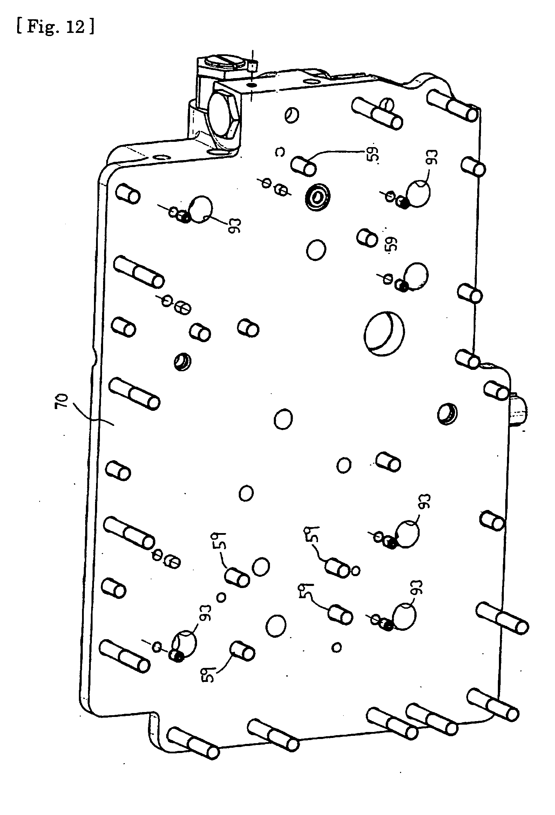

FIG. 12 shows a joint surface of the spacer plate 70 with the fulcrum plate 68, where an escape hole 93 that lets escape a head of a bolt 95 coupling the piston rod 7 and the piston 96 to each other is provided at a position corresponding to the cylinder hole 55. A screw through hole 59 which a fastening screw penetrates is provided around the escape hole 93 corresponding to the threaded hole 58.
The roller support member 51 is rotatably supported, by a joint 73, to the distal end of the friction roller support arm 69 pivoted to the boss portion 68a of the fulcrum plate 68 by the pivot shaft 72. The friction roller 5 is rotatably mounted to the roller support member 51 via the support shaft 52.
The roller support member 51 is provided with an oil passage 51b communicating with a discharge port 51a to which oil supplied to the pivot shaft 72 of the friction roller support arm 69 flows out from an oil passage 54 through an introduction oil passage 53 of the joint 73 so that the support shaft 52 and an entire periphery of the friction roller 5 are lubricated from the oil passage 51b. The reference numeral 54a denotes a plug. (See FIG. 8)

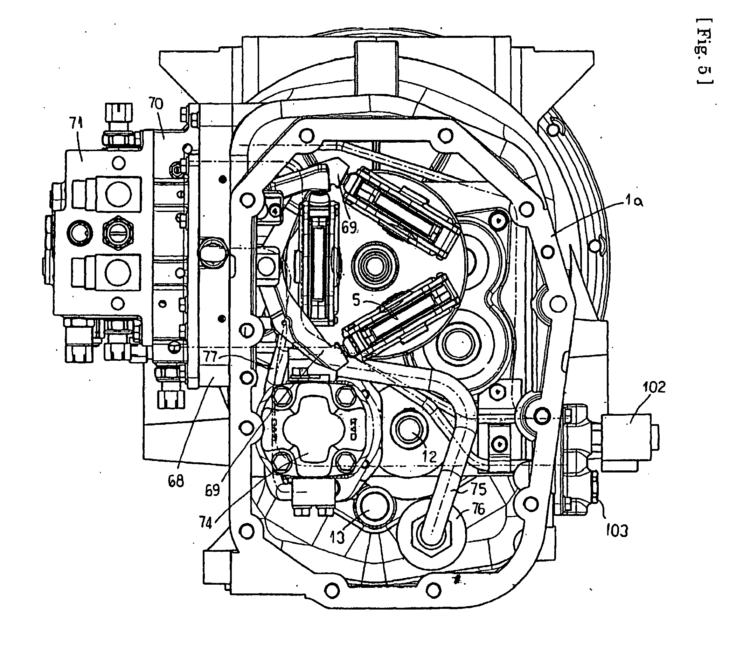

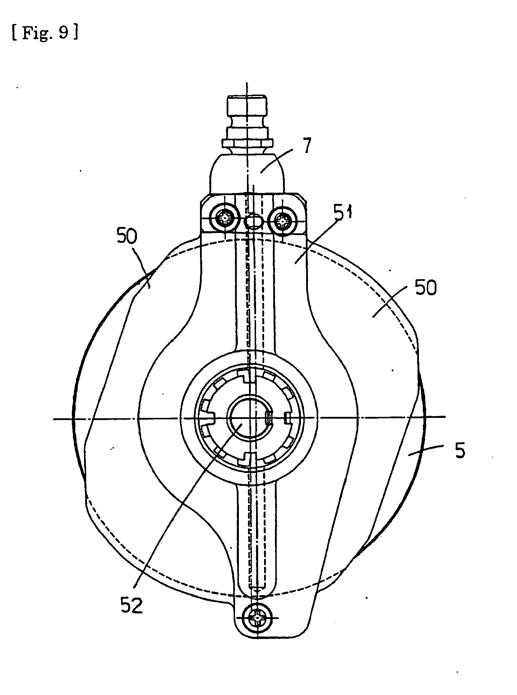

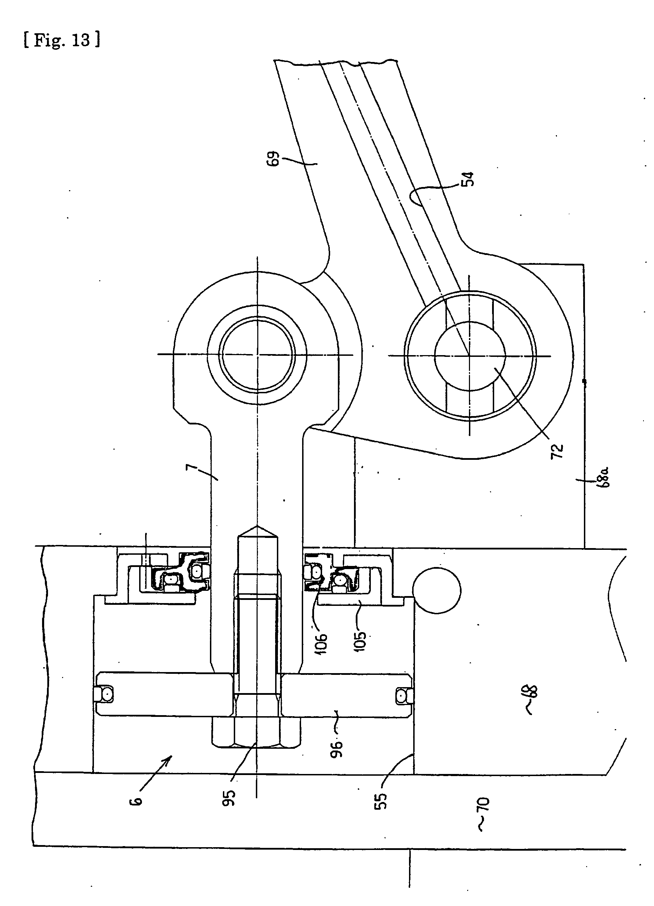

FIG. 13 is an enlarged view of the working cylinder 6, where, since the cylinder rod 7 is coupled to the friction roller support arm 69 such that the friction roller support arm 69 swings by advancing or retreating action of the cylinder rod 7, the cylinder rod 7 slightly swings according to the advancing or retreating action, and therefore a seal ring 106 fitted on an external side of the cylinder rod 7 is allowed to slightly slide laterally with respect to a seal ring seat 105 fitted in the cylinder hole 55.
The plurality of friction rollers 5 configured in the above manner perform continuously variable transmission at a transmission ratio corresponding to inclination angles of rolling surfaces of the plurality of friction rollers 5, adjusting their advanced or retreated positions by the plurality of working cylinders 6 within a full toroidal cavity formed by opposing faces of the input and output disks 4b, 4a, and the shape and length of each of the friction roller support arms 69 and the length of the cylinder rod 7 are determined such that the same motion amount of the cylinder rod 7 to an advance side and to a retreat side forms the same inclination angle of the friction roller 5.
As shown in FIG. 9, roller shrouds 50 are mounted to the roller support member 51 by screwing. The roller shroud 50 shrouds the friction roller 5 ... insofar as it will not trouble advancing and retreating operation between the output and input disks 4a, 4b, thereby introducing oil so that the rolling surfaces of the opposing disks 4a, 4b can be lubricated intensively and efficiently.
A hydraulic pump 74 is provided below the respective friction rollers 5..., oil is sucked from a suction filter 76 attached to a distal end of a suction pipe 75 extended downward, the oil is supplied from a discharge pipe 77 to an oil passage 78 attached to the inner face of the fulcrum plate 68, and the oil is supplied to the respective pivot shafts 72 of the friction roller support arms 69 from the oil passage 78. As shown in FIG. 5, the suction pipe 75 is engaged with the hydraulic pump 74 from the suction filter 76 positioned in the bottom of the front case 1a, making a detour around the PTO input shaft 12 and the front-wheel drive shaft 13, and the discharge pipe 77 is inserted into the oil passage 78 (distribution pipe).

With the above configuration, rotation of the engine E is transmitted to the toroidal transmission mechanism 4, and the rotation changed in speed by the toroidal transmission mechanism 4 is transmitted to the high-low clutch 30. Then, engaging the low-speed side clutch of the high-low clutch 30 to change the inclinations of the friction rollers 5 of the toroidal transmission mechanism 4, output rotation continuously changes its speed within a low-speed range from reverse rotation to forward rotation. This change of speed is suitable for a driving condition that a farm vehicle advances or retreats at low speed suitable for ground work. Alternatively, when the high-low clutch 30 is shifted to the high speed side to change the inclinations of the friction rollers 5 of the toroidal transmission mechanism 4, output rotation is continuously changed in speed within a high-speed range from forward rotation to reverse rotation. This change of speed is suitable for a driving condition that a work vehicle moves on a road.
The PTO output shaft 41 driving a ground working implement transmits power in the following manner.
By causing the gear 43 fixed to the driving input shaft 11 pivoted in a lower section of the toroidal transmission mechanism 4 to mesh with the gear 18 fixed to the PTO input shaft 12 within an interior portion defined by the front and rear partition walls 2, 3, rotation of the PTO input shaft 12 is transmitted to the PTO output shaft 41 via the PTO shaft transmission mechanism 44 and a PTO clutch 45 provided behind the rear partition wall 3. Rotation of the PTO output shaft 41 is changed in speed into an appropriate number of rotations by a PTO shaft second transmission mechanism 46 provided in the rear case 1c to be transmitted to a PTO output shaft 47. The hydraulic pump 74 is driven by causing a gear 115 fixed to the PTO input shaft 12 and a gear 116 fixed to an input shaft of the hydraulic pump 74 to mesh with each other.

Thus, since the driving input shaft 11, the PTO input shaft 12, and the front-wheel drive axle 13 are pivotally supported and only a few gear pairs exist in a space defined between the front and rear partition walls 2, 3 housing the toroidal transmission mechanism 4, hydraulic oil stored in the bottom is not stirred very often, and therefore bubbling of the hydraulic oil is minimized so that the toroidal transmission mechanism 4 is less adversely affected.
A speed change device that performs speed change of the toroidal transmission mechanism 4 is composed of the friction roller support arms 69 swingably pivoting the friction rollers 5, the fulcrum plate 68 having the pistons 96 that act on the friction roller support arms 69, the spacer plate 70 closing the cylinder holes 55 of the working cylinders 6 in which the piston 96 reciprocates, and the hydraulic block 71 constituting a control hydraulic device that controls the friction roller support arms 69.
A configuration is adopted that the fulcrum plate 68, the spacer plate 70, and the hydraulic block 71 included in the speed change device are disposed on a side wall of the transmission case 1. Specifically, such a configuration is adopted that the toroidal transmission mechanism 4 is housed in the case 1a constituting a part of the transmission case 1 but the speed change device is provided on a side wall of the case 1a. Since such a configuration is adopted that the fulcrum plate 68, the spacer plate 70, and the hydraulic block 71 are assembled in a stacking manner, as compared with a case where they are mounted to a lower portion of a transmission, it becomes possible to prevent influence on arrangement of the PTO shaft that drives a work machine mounted in a rear portion of a vehicle body, a shaft for front-wheel drive, or the like.
Further, a distance from a farm field increases, and therefore influence of splashing mud, stones, or the like decreases.

Further, as described above, since such a configuration is adopted that the working cylinders 6 that operate the plurality of friction rollers 5 to incline are provided on the fulcrum plate 68, and the cylinder holes 55 are closed by the spacer plates 70, the configuration and machining of the working cylinders 6 can be simplified, which results in reducing manufacturing cost.
Further, since such a configuration is adopted that the friction rollers 5 are supported by the roller support members 51, and the oil passages 78, 78a, 78b that supply oil to the plurality of roller support members 51 are disposed on an inner face of the fulcrum plate 68, oil pipes that supply oil to the friction rollers 5 can be centralized, which makes it possible to achieve a simple configuration.

As shown in a system diagram of a system of FIG. 3, an oil control system of the toroidal transmission mechanism 4 is provided with the working cylinders 6 ... of a double-action type that drive the respective friction rollers 5 to advance and retreat, and as well as supplying exclusive oil to the friction rollers 5 ... via the oil passages 54 formed in the respective friction roller support arms 69 ... so as to perform lubrication and cooling while securing friction transmission between the input disks 4b and the output disks 4a, the system controls the advancing and retreating drives of the friction rollers 5 ... driven by the respective working cylinders 6 ... and an end load pressure due to an axial end input of the variator shaft 10. These oils are exclusive oil to the toroidal transmission stored in the front case 1a, and used in a circulative manner. This makes it possible to cool the toroidal transmission mechanism 4 effectively by oil circulation, since the oil used for the toroidal transmission mechanism 4 can be stored separately from oil for common use stored in the transmission case 1.
Specifically, the plurality of working cylinders 6 of the plurality of friction rollers 5 all is hydraulically engaged in parallel, and each has two hydraulic supply control units that control working oil pressures on an advance side and on a retreat side of the piston rod 7 of the fulcrum plate 68, respectively. When hydraulic supply passages that drive the piston rods 7 of the plurality of working cylinders 6 to advance and retreat simultaneously in this manner is configured, supply passages to the advance side are configured on either front or back of the fulcrum plate 68, while supply passages to the retreat side are configured on the other. This makes it possible to simplify the configuration of a pressure oil supply circuit in the case of such speed change operation as inclining the plurality of friction rollers 5 in the same direction simultaneously.

The oil sucked by the pump 74 through the suction filter 76 passes again through a fine-mesh filter 85 by which foreign matter such as iron powder is removed from the oil, is adjusted in pressure by a main relief valve 9a, and separated into a flow sent to the above hydraulic control unit and a flow to a solenoid valve 97 and for lubrication of the friction rollers 5.
The flow to the solenoid valve 97 is used for lubrication and cooling of the friction rollers 5 while the pressure thereof is kept constant by a relief valve 99 and an accumulator 98.
The flow sent to the hydraulic control unit passes through a check valve 86, is stabilized in pressure by an accumulator 84, and separated into flows to the control units on the advance side and the retreat side of the working cylinder 6 and a flow for pressure control on the output and input disks 4a, 4b.
A hydraulic circuit on the advance side of the working cylinder 6 is composed of a solenoid decompression valve 90 controlled by a current value according to a transmission ratio, a pilot valve 89 that switches oil feed directions, an accumulator 92, and a first mode damper 101 that absorbs pulsation of oil pressure to throttle a flow rate, while a hydraulic circuit on the retreat side of the working cylinder 6 is similarly composed of a solenoid decompression valve 88, a pilot valve 87, an accumulator 91, and a first mode damper 100. A third mode damper 107 is provided just before supply to each of the working cylinders 6 to achieve further stabilization of oil pressure.
A pressure S1 on the retreat side of the working cylinder 6 is adjusted by the solenoid valve 88 and the check valve 87, while a pressure S2 on the advance side of the working cylinder 6 is adjusted by the solenoid valve 90 and the check valve 98. A third mode damper 108 is also provided on this side to achieve further stabilization of oil pressure.

By configuring a circuit for pressure control on the output and input disks 4a, 4b to supply a direct pressure and either higher one of the pressure S1 on the retreat side and the pressure S2 on the advance side by means of a relief valve 104 and two shuttle valves 79, 80 to a disk pressure supply unit 105 as an end load pressure of a transmission section, the end load pressure is controlled in response to variation in speed due to inclination actions of the friction rollers 5 ... so that rolling contact pressures of the respective friction rollers 5 ... are adjusted.
Further, each of the working cylinders 6 is provided with air vent passages 109, 110 on the advance side and on the retreat side, and the air vent passages 109, 110 are engaged with an air purge valve 102 and an anti-cavitation check valve 103 provided on a bottom portion of the front case 1a on an opposite side to a side on which the fulcrum plate 68 is mounted.
The reference numeral 54b denotes a lubrication circuit, which is configured to feed oil to the oil passage 54 shown in FIG. 8 to perform lubrication.

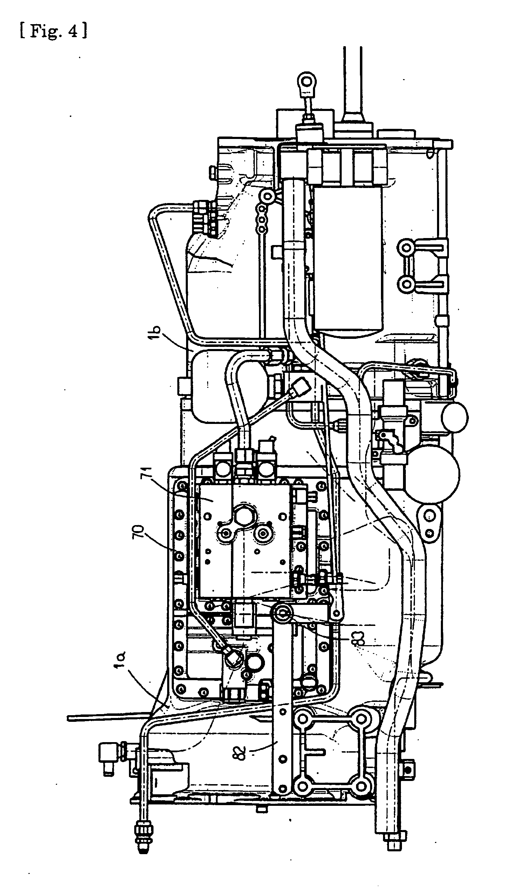

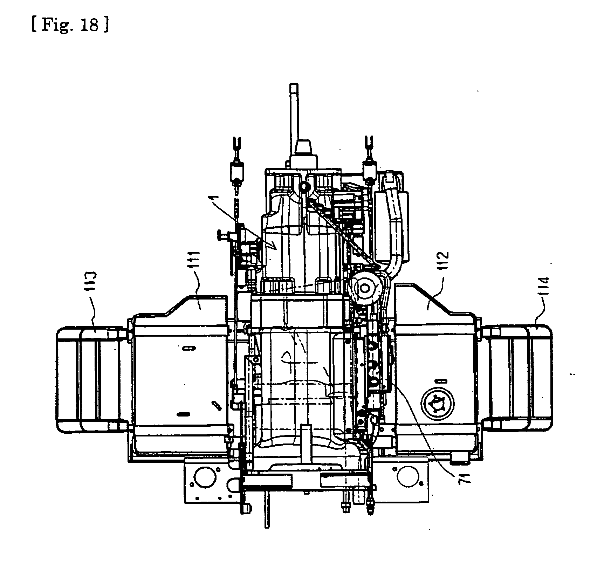

FIG. 18 shows an arrangement (plan view) of fuel tanks 111, 112 with respect to the transmission case 1, where the left direction of the figure indicates a front side of a vehicle body. Lifting and lowering steps 113, 114 of a tractor are positioned symmetrically with respect to right and left of the transmission case 1, and further, external positions of the lifting and lowering steps 113, 114 are determined inevitably according to dimensions of a vehicle body. Further, since the above hydraulic block 71 is mounted on the left side of the transmission case, a width from side to side of the left fuel tank 112 decreases.
Therefore, the external portion of the left fuel tank 112 is made close up to the lifting and lowering steps 114 so that the fuel tank is disposed between the lifting and lowering steps 114 and the hydraulic block 71 with reference to the external portion. This makes it possible to maximize the size of the left fuel tank 112. Since there is not a part, such as the hydraulic block 71, mounted in a portion where the right fuel tank 111 is to be disposed, the right fuel tank 111 is configured to have a width longer than that of the left fuel tank 112.
Note that, in FIG. 4, the reference numeral 82 denotes a relay arm of a linkage connecting a brake pedal and a brake, the relay arm being supported by a support shaft 83 pivoted to the spacer plate 70.

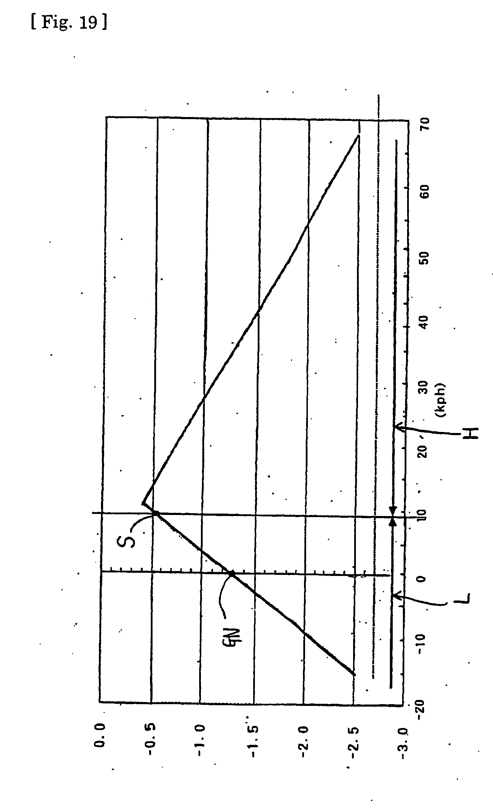

FIG. 19 shows a relationship between a vehicle speed and a variator ratio. The horizontal axis indicates the vehicle speed (kph), and the vertical axis indicates the variator ratio. The reference L denotes the low regime described above, showing a velocity range in an engagement state of the low-speed side clutch 65. The reference H denotes the high regime described above, showing a velocity range in an engagement state of the high-speed side clutch 64. The reference GN denotes a geared neutral, which is a position where the velocity is zero. The reference S denotes a synchronization position which is a switching point between the low-speed side clutch 65 and the high-speed side clutch 64. By applying back pressure to the hydraulic circuit immediately before switching the clutches at the synchronization S position, a shock due to switching the clutches can be prevented. The level of the back pressure is determined in proportion to the size of the low-speed side clutch 65 or the high-speed side clutch 64.
Control to the geared neutral GN is performed when a vehicle body stops, but when the tractor does not run for a certain length of time, wasteful energy consumption during the stoppage of the vehicle body can be suppressed by stopping oil pressure application to the low-speed side clutch 65. When the vehicle body does not stop according to a signal from a vehicle speed sensor, the vehicle body is stopped by another the geared neutral GN control.

Workability improves by providing an advance and retreat switch by which the tractor is caused to advance and retreat at an ultralow speed within the range of the low regime. A tractor is provided with an advance and retreat lever by which the vehicle body is caused to advance and retreat, but regardless of the position of the lever, the tractor is configured to cause the ultralow-speed advance and retreat switch to function. However, when the clutch is in a disengagement state with a clutch pedal stepped, the ultralow-speed advance and retreat switch does not function. A tractor may be configured such that it is provided with two accelerator pedals for advance and for retreat and it advances according to a stepping-on amount of the accelerator pedal for advance when the accelerator pedal for advance is stepped, while it retreats according to a stepping-on amount of the accelerator pedal for retreat when the accelerator pedal for retreat is stepped, regardless of an operation position of the advance and retreat lever.

In the case of operating the advance and retreat lever, following performance improves by changing the changing speed of the variator ratio according to an operation speed of the lever. By performing such setting that the engine does not start when the advance and retreat lever is positioned at a position other than a neutral position, unintentional driving of the tractor can be prevented.
Such a configuration is adopted that, during a driving work where the engine rotation speed is kept in a constant rotation according to operation of the accelerator lever and a working implement (rotary cultivator) is being driven, when the accelerator pedal is stepped, the variator ratio is changed to accelerate the tractor, while the tractor returns to its original vehicle speed when the accelerator pedal is released. This improves workability.
Alternatively, such a configuration may be adopted that, during a driving work where the engine rotation speed is kept in a constant rotation according to operation of the accelerator lever and a working implement (rotary cultivator) is being driven, when the clutch pedal is stepped, the variator ratio is changed corresponding to a length of a stepping-on time of the clutch pedal to decelerate the vehicle speed, while the vehicle speed returns to its original vehicle speed when the clutch pedal is released. In this case, such a configuration can be adopted that a position sensor is provided on the clutch pedal and the vehicle speed decreases according to an angle of the clutch pedal.

Alternatively, such a configuration may be adopted that, during a driving work where the engine rotation speed is kept in a constant rotation according to operation of the accelerator lever and a working implement (rotary cultivator) is being driven, when the brake pedal is stepped, the variator ratio is changed corresponding to a length of a stepping-on time of the brake pedal to decelerate the vehicle speed, while the vehicle speed returns to its original vehicle speed when the brake pedal is released. In this case, such a configuration can be adopted that a position sensor is provided on the brake pedal and the vehicle speed decreases according to an angle of the brake pedal.

Alternatively, such a configuration may be adopted that, during a driving work where the engine rotation speed is kept in a constant rotation according to operation of the accelerator lever and a working implement (rotary cultivator) is being driven, when the accelerator pedal is stepped during retreat driving according to operation of the advance and retreat lever toward the retreat side after a working implement (rotary cultivator) is elevated, the variator ratio is changed corresponding to a stepping-on amount of the accelerator pedal to advance the tractor. This makes it possible to change easily the direction of the tractor at a farm field end.

Further, by providing an inclination sensor that detects an inclination of a vehicle body, and increasing an engagement pressure of the low-speed side clutch 65 or the high-speed side clutch 64 according to increase in lengthwise inclination of the tractor, that is, in such a case as climbing a slope, stable driving on the slope becomes possible. Further, in a case where the vehicle body of the tractor causes lengthwise hunting, the hunting can be prevented by applying automatically the brake the rear wheels according to detection by the inclination sensor.

**DESCRIPTIONS OF REFERENCE NUMERALS**

| | |
|---|---|
| B | Spherical bearing |
| 1 | Transmission case |
| 2 | Front partition wall |
| 3 | Rear partition wall |
| 4 | Toroidal transmission mechanism |
| 4a | Output disk |
| 4b | Input disk |
| 5 | Friction roller |
| 6 | Working cylinder |
| 7 | Piston rod |
| 10 | Variator shaft |
| 51 | Roller support member |
| 55 | Cylinder hole |
| 55a | Hydraulic supply chamber |
| 55b | Hydraulic supply chamber |
| 68 | Fulcrum plate |
| 69 | Friction roller support arm |
| 70 | Spacer plate |
| 71 | Hydraulic block |
| 72 | Pivot shaft |
| 78 | Oil passage |
| 78a | Oil passage |
| 78b | Oil passage |
| 96 | Piston |

## Claims

1. A work vehicle where friction rollers (5) are provided between an input disk (4b) and an output disk (4a) mounted to a variator shaft (10), a toroidal transmission mechanism (4) which changes inclination angles of the friction rollers (5) to change rotation on the side of the input disk (4b) and transmit the same to the side of the output disk (4a) is housed in a transmission case (1), and a speed change device which changes the inclination angles of the friction rollers (5) of the toroidal transmission mechanism (4) is provided, **characterised in that** the speed change device comprises friction roller support arms (69) swingably pivoting the friction rollers (5); a fulcrum plate (68) having pistons (96) that swing the friction roller support arms (69) about pivot shafts (72); a spacer plate (70) that closes cylinder holes (55) of working cylinders (6) reciprocating the pistons (96); and a hydraulic block (71) constituting a control hydraulic device that supplies or discharges oil into or from the working cylinders (6), and the fulcrum plate (68), the spacer plate (70), and the hydraulic block (71) in the speed change device are assembled in a pile to a side wall of the transmission case (1) whereby said side wall is a left or a right side wall as seen in a driving direction of the vehicle.

2. The work vehicle according to claim 1, wherein a configuration that the friction rollers (5) are pivoted by a plurality of roller support members (51) is adopted, a configuration that the roller support members (51) and the friction roller support arms (69) are coupled to each other via spherical bearings (B) to be supported is adopted, and a configuration that oil is supplied from a plurality of oil passages (78, 78a, 78b) disposed on an inner face of the fulcrum plate (68) to the plurality of roller support members (51) is adopted.

3. The work vehicle according to claim 1, wherein a configuration that partition walls (2), (3) that isolate the toroidal transmission mechanism (4) and the other sections from each other are disposed within the transmission case (1) and oil is stored in a bottom portion isolated from the other portions is adopted, and the oil is circulated to lubricate the toroidal transmission mechanism (4).

4. The work vehicle according to claim 1, wherein, in a hydraulic supply passage for reciprocating piston rods (7) coupled to the pistons (96), hydraulic supply chambers (55a) which advance the piston rods (7) is configured on either front or back side of the fulcrum plate (68), and hydraulic supply chambers (55b) which retreat the piston rods (7) is configured on the other side thereof.

## Patentansprüche

1. Arbeitsfahrzeug, in dem zwischen einer Eingabescheibe (4b) und einer Ausgabescheibe (4a), die auf eine Variator-Getriebewelle (10) montiert sind, Reibrollen (5) bereitgestellt sind, ein Toroidgetriebemechanismus (4), der Neigungswinkel der Reibrollen (5) verändert, um die Drehung auf der Seite der Eingangsscheibe (4b) zu verändern und sie auf die Seite der Ausgangsscheibe (4a) zu übertragen, in einem Getriebegehäuse (1) angeordnet ist und eine Drehzahlveränderungsvorrichtung, welche die Neigungswinkel der Reibrollen (5) des Toroidgetriebemechanismus (4) verändert, bereitgestellt ist, **dadurch gekennzeichnet, dass** die Drehzahlveränderungsvorrichtung Reibrollen-Tragarme (69) umfasst, welche die Reibrollen (5) schwingbar schwenken, eine Stützplatte (68) mit Kolben (96), welche die Reibrollen-Tragarme (69) um Drehwellen (72) schwingen, eine Abstandsplatte (70), welche Zylinderöffnungen (55) von Arbeitszylindern (6) verschließt, die die Kolben (96) auf und nieder gleiten lassen, und einen Hydraulikblock (71), der eine Hydrauliksteuervorrichtung bildet, die den Arbeitszylindern (6) Öl zuführt oder es daraus ableitet, und die Stützplatte (68), die Abstandsplatte (70) und der Hydraulikblock (71) in der Drehzahlveränderungsvorrichtung in einem Stapel an einer Seitenwand des Getriebegehäuses (1) montiert sind, wobei die Seitenwand in Fahrtrichtung des Fahrzeugs gesehen eine linke oder rechte Seitenwand ist.

2. Arbeitsfahrzeug nach Anspruch 1, wobei eine Gestaltung Anwendung findet, in der die Reibrollen (5) von mehreren Rollentragelementen (51) geschwenkt werden, eine Gestaltung Anwendung findet, in der die Rollentragelemente (51) und Reibrollen-Tragarme (69) mittels Kugellagern (B) zu deren Unterstützung gekoppelt sind, und eine Gestaltung Anwendung findet, in der den mehreren Rollentragelementen (51) von mehreren Öldurchlässen (78, 78a, 78b), die an einer Innenfläche der Stützplatte (68) angeordnet sind, Öl zugeführt wird.

3. Arbeitsfahrzeug nach Anspruch 1, wobei eine Gestaltung Anwendung findet, in der Trennwände (2), (3) die den Toroidgetriebemechanismus (4) und die anderen Abschnitte voneinander isolieren, im Getriebegehäuse (1) angeordnet sind und Öl in einem Bodenabschnitt gespeichert ist, der von den anderen Abschnitten isoliert ist, und das Öl umgewälzt wird, um den Toroidgetriebemechanismus (4) zu schmieren.

4. Arbeitsfahrzeug nach Anspruch 1, wobei in einem hydraulischen Zufuhrdurchlass für auf und nieder gleitende Kolbenstangen (7), die mit den Kolben (96) gekoppelt sind, hydraulische Zufuhrkammern (55a), welche die Kolbenstangen (7) vorwärts treiben, entweder an der Vorder- oder an der Rückseite der Stützplatte (68) gestaltet sind und hydraulische Zufuhrkammern (55b), welche die Kolbenstangen (7) zurückziehen, an der jeweils anderen Seite davon gestaltet sind.

## Revendications

1. Véhicule de travail dans lequel des rouleaux de frottement (5) sont fournis entre un disque d'entrée (4b) et un disque de sortie (4a) montés sur un arbre de variateur (10), un mécanisme de transmission toroïdal (4) qui change les angles d'inclinaison des rouleaux de frottement (5) afin de changer la rotation sur le côté du disque d'entrée (4b) et transmettre celle-ci à un côté du disque de sortie (4a) est logé dans un carter de transmission (1), et un dispositif de changement de vitesse qui change les angles d'inclinaison des rouleaux de frottement (5) du mécanisme de transmission toroïdal (4) est fourni, **caractérisé en ce que** le dispositif de changement de vitesse comprend des bras de support de rouleaux de frottement (69) qui font pivoter par basculement les rouleaux de frottement (5) ; une plaque d'appui (68) comportant des pistons (96) qui font basculer les bras de support de rouleaux de frottement (69) autour d'arbres pivots (72) ; une plaque d'écartement (70) qui ferme les trous de cylindre (55) de cylindres de travail (6) déplaçant en va et vient les pistons (96) ; et un bloc hydraulique (71) constituant un dispositif hydraulique de commande qui fournit de l'huile dans les cylindres de travail (6) et la décharge de ceux-ci, et la plaque d'appui (68), la plaque d'écartement (70) et le bloc hydraulique (71) dans le dispositif de changement de vitesse sont assemblés en pile contre une paroi latérale du carter de transmission (1), ladite paroi latérale étant une paroi latérale gauche ou droite vue dans un sens de conduite du véhicule.

2. Véhicule de travail selon la revendication 1, dans lequel une configuration selon laquelle les rouleaux de frottement (5) sont pivotés par une pluralité d'éléments de support de rouleaux (51) est adoptée, une configuration selon laquelle les éléments de support de rouleaux (51) et les bras de support de rouleaux de frottement (69) sont couplés les uns aux autres par l'intermédiaire de paliers sphériques (B) pour leur support est adoptée, et une configuration selon laquelle de l'huile est fournie depuis une pluralité de passages d'huile (78, 78a, 78b) disposés sur une face interne de la plaque d'appui (68) à la pluralité d'éléments de support de rouleaux (51) est adoptée.

3. Véhicule de travail selon la revendication 1, dans lequel est adoptée une configuration selon laquelle des parois de compartimentage (2), (3) qui isolent le mécanisme de transmission toroïdal (4) et les autres sections les uns des autres sont disposées dans le carter de transmission (1) et de l'huile est stockée dans une partie inférieure isolée des autres parties, et une circulation d'huile est effectuée pour lubrifier le mécanisme de transmission toroïdal (4).

4. Véhicule de travail selon la revendication 1, dans lequel, dans un passage d'alimentation hydraulique pour déplacer en va et vient des tiges de piston (7) couplées aux pistons (96), des chambres d'alimentation hydraulique (55a) qui font avancer les tiges de pistons (7) sont configurées sur le côté frontal ou le côté arrière de la plaque d'appui (68), et des chambres d'alimentation hydraulique (55b) qui rétractent les tiges de piston (7) sont configurées sur l'autre côté.
